# EUROPÄISCHE PATENTSCHRIFT

(11) **EP 3 593 620 B1**
(45) Veröffentlichungstag und Bekanntmachung des Hinweises auf die Patenterteilung: **30.08.2023**
(21) Anmeldenummer: 19172941.7
(22) Anmeldetag: 07.05.2019
(51) Int. Cl.: A01D 43/08

(54) **ERNTESYSTEM**
HARVESTING SYSTEM
SYSTÈME DE RÉCOLTE

(30) Priorität: 09.07.2018 DE 102018116578
(43) Veröffentlichungstag der Anmeldung: 15.01.2020
(73) Patentinhaber: CLAAS Selbstfahrende Erntemaschinen GmbH, 33428 Harsewinkel (DE)
(72) Erfinder: Kleverth, Johannes, 48703 Stadtlohn (DE)
(74) Vertreter: CLAAS Gruppe

(56) Entgegenhaltungen:
- EP-A1- 0 995 351
- EP-A1- 2 100 495
- EP-A2- 2 397 027
- EP-A2- 2 452 551
- US-A1- 2009 044 505

## Beschreibung

Die vorliegende Erfindung betrifft ein Erntesystem gemäß dem Oberbegriff es Anspruches 1. Weiterhin betrifft die Erfindung ein Verfahren zum Betreiben eines Erntesystems gemäß dem Oberbegriff des Anspruches 13.

Ein Erntesystem der eingangs genannten Art umfasst einen selbstfahrenden Feldhäcksler und einen von einem Zugfahrzeug gezogenen Transportwagen, auf welchen Erntegut überladen welche, das der Feldhäcksler von einem Feld abgeerntet hat. Das Überladen erfolgt im Allgemeinen auf den seitlich neben dem Feldhäcksler fahrenden Transportwagen mittels einer Überladevorrichtung. Die Überladevorrichtung ist mittels einer Aktuatorik zumindest um eine, insbesondere vertikale, Achse schwenkbar, so dass ein Überladen sowohl zur Seite als auch nach hinten erfolgen kann. Zu Beginn eines Erntevorganges von stängeligem Erntegut wie beispielsweise Mais wird das abzuerntende Feld angeschnitten, das heißt der Feldhäcksler fährt erstmalig in einen abzuerntenden Bestand, um eine Fahrspur für den von dem Zugfahrzeug gezogenen Transportwagen zu schaffen. Während des Anschneidens wird die Überladevorrichtung entgegen der Fahrtrichtung nach hinten verschwenkt, um das Erntegut in den dahinter befindlichen Transportwagen zu überladen. Dabei wird ein möglichst mittiger Auftreffpunkt auf dem Transportwagen anvisiert, um Überladeverluste zu minimieren. Bereits geringe Lenkbewegungen während des Anschneidens können dazu führen, dass dieser mittige Auftreffpunkt im Transportwagen nur durch ein aktives Nachsteuern der Überladevorrichtung gehalten werden kann. Das manuelle Nachsteuern der Position der Überladevorrichtung durch eine Bedienperson des Feldhäckslers ist aufwendig, zumal der Überladeprozess nicht im unmittelbaren Blickfeld der Bedienperson stattfindet.

Aus der EP 0 995 351 B1 sind ein Erntesystem gemäß dem Oberbegriff des Anspruches 1 sowie ein Verfahren zum Betreiben eines Erntesystems gemäß dem Oberbegriff des Anspruches 13 bekannt. Darin offenbart ist die automatisierte Ansteuerung einer Überladevorrichtung in Abhängigkeit vom Lenkwinkel einer Achsschenkellenkung. Mittels einer Steuerungseinrichtung wird ein Winkel zwischen der Überladevorrichtung und der Längsachse des Feldhäckslers in Abhängigkeit von dem Lenkwinkel berechnet, unter welchem die Überladevorrichtung bezüglich der Längsachse positioniert werden muss, um den Auftreffpunkt auf dem Transportwagen halten zu können.

Ausgehend von dem vorstehend genannten Stand der Technik liegt der Erfindung die Aufgabe zugrunde, ein Erntesystem der eingangs genannten Art sowie ein Verfahren zum Betreiben eines Erntesystems weiterzubilden, welches sich durch eine genauere Ansteuerung der Überladevorrichtung zur Einhaltung des Auftreffpunktes auszeichnet, während ein Transportwagen von einem Zugfahrzeug hinter dem Feldhäcksler hergezogen wird.

Die vorstehend formulierte Aufgabe wird durch ein Erntesystem gemäß dem Anspruch 1 sowie ein Verfahren zum Betreiben eines Erntesystems gemäß dem Anspruch 13 gelöst.

Vorteilhafte Weiterbildungen sind Gegenstand der Unteransprüche.

Gemäß dem Anspruch 1 wird ein Erntesystem vorgeschlagen, umfassend einen selbstfahrenden Feldhäcksler und einen von einem Zugfahrzeug gezogenen Transportwagen, welche während eines Erntevorganges zumindest zeitweise hintereinander fahren, wobei zum Überladen von durch den Feldhäcksler aufgenommenen Erntegutes auf den rückwärtigen Transportwagen, eine durch eine Aktuatorik um zumindest eine Achse verstellbare Überladevorrichtung an dem Feldhäcksler angeordnet ist, die durch eine Steuereinrichtung automatisiert ansteuerbar ist, wobei die Einstellung eines Kompensationswinkels zwischen der Überladevorrichtung und der Längsachse des Feldhäckslers zur Einhaltung eines Auftreffpunktes in dem Transportwagen in Abhängigkeit von einer Änderung eines Lenkwinkels des Feldhäckslers erfolgt. Um eine genauere Ansteuerung der Überladevorrichtung zur Einhaltung des Auftreffpunktes in dem Transportwagen zu erreichen, wird erfindungsgemäß vorgeschlagen, dass die Einstellung des Kompensationswinkels unter Berücksichtigung zumindest eines zusätzlichen die Fahrdynamik, insbesondere Querdynamik, beeinflussenden, der Steuereinrichtung zugeführten Parameters erfolgt. Die tatsächliche Auswirkung einer vorgenommenen Lenkbewegung auf den Feldhäcksler, die zu einem Ausschwenken des Hecks des Feldhäckslers führt und somit eine Korrektur der Position der Überladevorrichtung erfordert, ist nicht alleine von dem Lenkwinkel abhängig. Das Berücksichtigen des zumindest einen zusätzlichen die Fahrdynamik beeinflussenden Parameters erhöht die Genauigkeit der automatisierten Ansteuerung der Aktuatorik durch die Steuerungseinrichtung. Eine Erhöhung der Genauigkeit der Ansteuerung ist insbesondere vor dem Hintergrund des größeren Abstands zwischen der Überladevorrichtung und dem Auftreffpunkt auf dem Transportwagen erforderlich, welcher sich im Unterschied zu einem seitlichen Überladen bei einem rückwärtigen Überladen einstellt. Durch die automatisierte und verfeinerte Ansteuerung kann sich die Bedienperson vollumfänglich auf den Erntevorgang und das vor ihr liegende Feld konzentrieren.

Bevorzugt kann der zumindest eine zusätzliche Parameter eine über die durch die Lenkbewegung des Feldhäckslers hervorgerufene Beeinflussung der Querdynamik hinausgehende Einflussgröße berücksichtigen. Neben der reinen Lenkbewegung und der damit verbundenen Lenkwinkeländerung kann die Querdynamik des Feldhäckslers durch zumindest eine weitere Einflussgröße beeinflusst werden, die eine stärkere Korrektur der Position der Überladevorrichtung erforderlich werden lässt, um den Auftreffpunkt auf dem Transportwagen zu halten. Dabei wird das Ausschwenken des Hecks des Feldhäckslers aufgrund der Lenkbewegung und der weiteren Einflussgröße kompensiert, bei der das Ausschwenken in einer Größenordnung erfolgt, die nicht alleine auf die Lenkwinkeländerung zurückzuführen ist.

Gemäß einer bevorzugten Weiterbildung kann der zumindest eine zusätzliche Parameter durch eine manuelle Eingabe der Steuereinrichtung bereitstellbar sein. Eine Bedienperson des Feldhäckslers erhält somit die Möglichkeit, eine Einschätzung des Einflusses einer die Querdynamik beeinflussenden Einflussgröße selbst vorzunehmen und die Größenordnung des zumindest einen zusätzlichen Parameters entsprechend vorzugeben. Die Bedienperson kann dadurch den Einfluss auf die Querdynamik beurteilen und gewichten. Beispielsweise können mehrere Werte des zumindest einen zusätzlichen Parameters in einer Speichervorrichtung der Steuerungseinrichtung hinterlegt sein. Die Werte des zumindest einen zusätzlichen Parameters können auf einer Anzeigevorrichtung dargestellt und durch Eingabemittel manuell ausgewählt werden.

Weiterhin kann die Steuerungsvorrichtung dazu eingerichtet sein, die Intensität der Einstellung des Kompensationswinkels durch die Antriebsanordnung unter Berücksichtigung einer vorgebbaren Gewichtung durchzuführen. Dies bietet einer Bedienperson die Möglichkeit, die Ausprägung einer Lenkwinkeländerung auf die Querdynamik in der Weise zu berücksichtigen, dass durch eine auswählbare Empfindlichkeitseinstellung die Intensität der Ansteuerung justierbar ist. Dies kann vor dem Hintergrund geschehen, dass die grundsätzlichen Zusammenhänge der einzelnen Einflussgrößen, wie z.B. der Lenkwinkel, die Fahrgeschwindigkeit, die sich aus der Position von Feldhäcksler und Transportwagen beim Überladen ergebenden geometrischen Zusammenhänge, auf die Überladevorrichtung in der Steuerungseinrichtung anhand von Kennlinien oder Kennfeldern regelungstechnisch hinterlegt sein können.

Alternativ oder zusätzlich kann zur Bereitstellung des zumindest einen zusätzlichen Parameter zumindest ein an dem Feldhäcksler angeordneter Sensor vorgesehen sein. Von dem Sensor erfasste Signale können an die Steuerungseinrichtung übermittelt und von dieser ausgewertet werden. Auf Basis der Auswertung der Signale des Sensors wählt die Steuerungseinrichtung einen korrespondierenden Wert des zumindest einen zusätzlichen Parameters aus, um die automatisierte Ansteuerung der Aktuatorik der Überladevorrichtung zu verfeinern. Bei dem Sensor kann es sich beispielsweise um einen optischen Sensor handeln.

Dabei kann der zumindest eine zusätzliche Parameter die Bodenbeschaffenheit sein. Insbesondere die Beschaffenheit des befahrenen Bodens beeinflusst die Querdynamik des Feldhäckslers. Unter Bodenbeschaffenheit als zusätzlichem Parameter ist hier in erster Linie die Beschaffenheit des Bodens bezüglich. dessen Verformung zu verstehen. Auf feuchtem Boden ist die Bodenverformung höher, die Bodeneingriffsmittel wirken nicht so stark. Deshalb führt eine Lenkbewegung zu einem geringeren Ausschwenken des Hecks. Auf sehr unebenem oder trockenem Feldboden kann eine Lenkbewegung zu einem stärkeren Ausschwenken des Hecks des Feldhäckslers führen, als dies auf einem trockenen, ebenen bzw. feuchten und aufgeweichten Feldboden der Fall wäre. Hingegen beeinflussen Unebenheiten des trockenen Feldbodens die Querdynamik stärker als dies bei feuchtem Feldboden der Fall ist. So können bei einer Lenkbewegung die Bodeneingriffsmittel der Lenkachse durch die Unebenheit des Feldbodens seitlich abgelenkt werden, dass diese einen parallelen Versatz zu der angestrebten Fahrspur erfahren. Würde lediglich die Änderung des Lenkwinkels berücksichtigt, wie dies beim eingangs genannten Stand der Technik der Fall ist, würde das Nachsteuern der Überladevorrichtung den Einfluss der Bodenbeschaffenheit unberücksichtigt lassen, so dass der angestrebte Auftreffpunkt auf dem Transportwagen trotzdem verfehlt wird. Durch den an dem Feldhäcksler angeordneten, insbesondere optischen, Sensor kann vorausschauend auf die Bodenbeschaffenheit geschlossen werden. Dadurch kann eine kontinuierliche Anpassung des Parameters durchgeführt werden. Die Ausprägung der Lenkbewegung auf die Querdynamik kann alternativ oder zusätzlich durch einen Gyroskop erfasst werden.

Weiterhin kann ein weiterer zusätzlicher Parameter eine aktuell ermittelte Fahrgeschwindigkeit sein. Je höher die jeweilige Fahrgeschwindigkeit, umso stärker wirken sich eine Lenkwinkeländerung durch eine Lenkbewegung sowie die Bodenbeschaffenheit auf das daraus resultierende Ausschwenken des Hecks des Feldhäckslers aus.

Des Weiteren kann die Einstellung des Kompensationswinkels unter Berücksichtigung von spezifischen Maschinenparametern des Feldhäckslers erfolgen. Unter spezifischen Maschinenparameter sind Abmessungen und Abstände des Feldhäckslers zu verstehen, welche Einfluss auf das Überladen sowie die Fahrdynamik haben können. Beispielhaft sei die Länge der Überladevorrichtung, die Reifengröße oder der Abstand zwischen der vertikalen Achse, um welche die Überladevorrichtung verschwenkt wird, genannt. Diese spezifischen Maschinenparameter sind in der Regel konstant und können somit in einer Speichervorrichtung der Steuerungseinrichtung hinterlegt werden. Um etwaige Änderungen eines oder mehrerer dieser spezifischen Maschinenparameter berücksichtigen zu können, ist bevorzugt vorgesehen, dass die Maschinenparameter änderbar in der Speichervorrichtung hinterlegt sind. So kann beispielsweise eine Änderung der Länge der Überladevorrichtung, beispielsweise durch das Verwenden eines Verlängerungsabschnitts, berücksichtigt werden, da dies unmittelbar Einfluss auf die Einstellung des Kompensationswinkels zwischen der Überladevorrichtung und der Längsachse des Feldhäckslers zur Einhaltung des Auftreffpunktes auf dem Transportwagen hat.

Insbesondere kann zur Bestimmung eines Lenkwinkels ein Lenkwinkelsensor vorgesehen sein. Ein solcher Lenkwinkelsensor kann Bestandteil eines bereits vorhandenen automatischen Lenksystems des Feldhäckslers sein. Dabei kann der Lenkwinkelsensor an der Lenkachse des Feldhäckslers installiert sein.

Vorzugsweise kann die Überladevorrichtung im Bereich ihrer Anordnung an dem Feldhäcksler um eine vertikale und eine horizontale Achse verschwenkbar sein. Durch das Verschwenken der Überladevorrichtung um die horizontale Achse lässt sich der Verlauf der Wurfbahn beeinflussen.

Zudem kann die Überladevorrichtung an ihrem freien Ende ein um eine horizontale Achse verstellbares Gutablenkelement aufweisen, welches in Abhängigkeit von der Position der Überladevorrichtung einstellbar ist.

Die eingangs gestellte Aufgabe wird weiterhin durch ein Verfahren gemäß dem Anspruch 13 gelöst.

Gemäß dem Anspruch 13 ist ein Verfahren zum Betreiben eines Erntesystem vorgesehen welches einen selbstfahrenden Feldhäcksler und einen von einem Zugfahrzeug gezogenen Transportwagen umfasst, welche während eines Erntevorganges hintereinander fahren, wobei Erntegut, welches durch den Feldhäcksler aufgenommen wird, durch eine mittels einer Aktuatorik um zumindest eine Achse verstellbaren Überladevorrichtung, die an dem Feldhäcksler angeordnet ist, auf den rückwärtigen Transportwagen überladen wird. Die Überladevorrichtung wird durch eine Steuereinrichtung automatisiert angesteuert, wobei die Einstellung eines Kompensationswinkels zwischen der Überladevorrichtung und der Längsachse des Feldhäckslers zur Einhaltung eines Auftreffpunktes in dem Transportwagen in Abhängigkeit von einem Lenkwinkel des Feldhäckslers bestimmt wird. Erfindungsgemäß ist vorgesehen, dass die Einstellung des Kompensationswinkels unter Berücksichtigung zumindest eines zusätzlichen, die Fahrdynamik, insbesondere die Querdynamik, beeinflussenden Parameters, welcher der Steuerungseinrichtung bereitgestellt wird, durchgeführt wird. Dabei wird durch den zumindest einen zusätzlichen Parameter eine über die durch die Lenkbewegung des Feldhäckslers hervorgerufene Beeinflussung der Querdynamik hinausgehende Einflussgröße berücksichtigt. Anhand des aus der Lenkbewegung resultierenden Lenkwinkels und dem zumindest einen zusätzlichen Parameter wird die Ausprägung der seitlichen Bewegung des Hecks des Feldhäckslers berechnet. Auf Grundlage der Berechnung der Ausprägung der seitlichen Bewegung wird die Überladevorrichtung durch die Ansteuerung der Aktuatorik entgegen der seitlichen Bewegungsrichtung des Hecks des Feldhäckslers bewegt.

Dabei kann der zumindest eine zusätzliche, die Fahrdynamik beeinflussende Parameter manuell vorgegeben oder durch zumindest einen an dem Feldhäcksler angeordneten Sensor erfasst werden. Hierzu kann der Bediener mittels einer Eingabe-Ausgabevorrichtung eine Auswahl aus in der Steuerungseinrichtung hinterlegten Werten treffen, welche den Einfluss des einen zusätzlichen, die Fahrdynamik beeinflussenden Parameters beschreibt. Bei dem zusätzlichen Parameter handelt es sich um die Bodenbeschaffenheit des zu befahrenden Feldbodens, welche durch die Inaugenscheinnahme durch die Bedienperson bestimmt wird. Alternativ kann die Bodenbeschaffenheit mittels eines Sensors bestimmt werden, dessen Signale von der Steuerungseinrichtung ausgewertet werden. Auf Basis der Auswertung bestimmt die Steuerungseinrichtung die Größenordnung des zusätzlichen, die Fahrdynamik beeinflussenden Parameters. Denkbar ist jedoch auch, dass auf Grundlage eines insbesondere an der Antriebsachse ermittelten Schlupfverhaltens der Bodeneingriffsmittel auf den zumindest einen zusätzlichen Parameter geschlossen wird.

Des Weiteren kann die Intensität der Einstellung des Kompensationswinkels durch die Antriebsanordnung unter Berücksichtigung einer vorgebbaren Gewichtung durchgeführt werden. Dies bietet einer Bedienperson die Möglichkeit, die Ausprägung einer Lenkwinkeländerung auf die Querdynamik zu berücksichtigen, indem durch eine auswählbare Empfindlichkeitseinstellung die Intensität der Ansteuerung justiert wird. Hierzu kann die Steuerungseinrichtung zum Empfang einer Eingabe für eine Gewichtung mittels der Eingabe-Ausgabevorrichtung des Feldhäckslers eingerichtet sein.

Die vorliegende Erfindung wird nachstehend anhand eines in den Zeichnungen dargestellten Ausführungsbeispieles näher erläutert.

Es zeigen:
- Fig. 1: eine schematische Seitenansicht eines Erntesystems;
- Fig. 2: eine Detailansicht einer Überladevorrichtung gemäß Fig. 1;
- Fig. 3: eine Ansicht auf das Erntesystem von oben während des Anschneidens eines Feldes;
- Fig. 4: eine Ansicht auf das Erntesystem gemäß Fig. 3 nach Ausführung einer Lenkbewegung durch den Feldhäcksler;
- Fig. 5: eine Ansicht auf das Erntesystem gemäß Fig. 4 nach Kompensation der Lenkbewegung durch Ansteuerung der Überladevorrichtung.

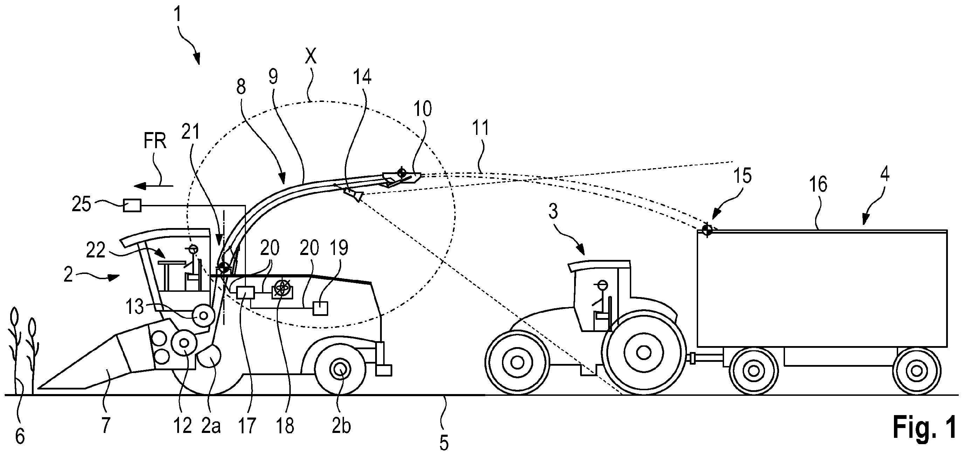

In Fig. 1 ist eine schematische Seitenansicht eines Erntesystems 1 dargestellt. Das Erntesystem 1 umfasst einen Feldhäcksler 2 und einen von einem Zugfahrzeug 3, wie einem Traktor, gezogenen Transportwagen 4. Das Erntesystem 1 bewegt sich in Fahrtrichtung FR über einen abzuerntenden Feldboden 5. Dabei fahren das Zugfahrzeug 3 und der Transportwagen 4 als Gespann hinter dem Feldhäcksler 2 in im Wesentlichen einer Linie oder seitlich versetzt hinterher. Der Feldhäcksler 2 weist eine angetriebene Vorderachse 2a sowie eine hintere Lenkachse 2b auf, an denen jeweils Bodeneingriffsmittel angeordnet sind.

Das Überladen von Erntegut 6, welches der Feldhäcksler 2 mit einem Vorsatzgerät 7 aufgenommen hat, erfolgt mittels einer im Heckbereich des Feldhäckslers 2 angeordneten verstellbaren Überladevorrichtung 8. Die Überladevorrichtung 8 umfasst einen Auswurfkrümmer 9 sowie ein am freien Ende des Auswurfkrümmers 9 angeordnetes, als Auswurfkrümmerklappe ausgebildetes, verstellbares Gutablenkelement 10. Dazu wird Erntegut 6 durch eine Häckselvorrichtung 12 zerkleinert und durch diese und eine Nachbeschleunigervorrichtung 13 als beschleunigter Erntegutstrom 11 der Überladevorrichtung 8 zugeführt und auf den Transportwagen 4 überladen. Aufgrund der vielfach großen Arbeitsbreite des Vorsatzgerätes 7 kann es heutzutage immer häufiger vorkommen, dass das Zugfahrzeug 3 und der Transportwagen 4 seitlich versetzt hinter dem Feldhäcksler 2 fahren, um die Sichtbarkeit in den Transportwagen 4 für den Fahrer des Feldhäckslers 2 zu verbessern.

An dem Auswurfkrümmer 9 ist eine optische Sensoreinrichtung 14 angeordnet. Mittels der optischen Sensoreinrichtung 14 wird ein während des Überladens einzuhaltender Auftreffpunkt 15 des Erntegutstroms 11 auf dem Transportwagen 4 bestimmt. Die Position des Auftreffpunktes 15 hängt unter anderem von einer gewählten Beladestrategie ab und verändert sich in Abhängigkeit vom jeweiligen Beladezustand des Transportwagens 4. Die optische Sensoreinrichtung 14 steht mit einer Steuerungseinrichtung 17 des Feldhäckslers 2 mittels eines Bussystems 20 in Verbindung. Die Sensoreinrichtung 14 übermittelt Daten an die Steuerungseinrichtung 17, welche von dieser ausgewertet werden. Die Steuerungseinrichtung 17 dient der Ansteuerung einer Antriebsanordnung 21, mittels der die Überladevorrichtung 8 verstellbar ist. Hierzu verwendet die Steuerungseinrichtung 17 die von der optischen Sensoreinrichtung 14 empfangenen und ausgewerteten Daten. Der Auftreffpunkt 15 wird von der Steuerungseinrichtung 17 basierend auf einer Information bezüglich der Geometrie des Transportwagens 4 erzeugt, wobei die Information aus einer in der Steuerungseinrichtung 17 hinterlegten Datenbank oder dergleichen abgerufen werden kann. Hierzu kann mittels der Sensoreinrichtung 14 eine Rahmenstruktur 16 des Transportwagens 4 erfasst werden, um diesen durch Abgleich zu identifizieren. Eine in der Fahrerkabine des Feldhäckslers 2 angeordnete Eingabe-Ausgabevorrichtung 22 umfasst eine Anzeigevorrichtung sowie Eingabemittel. Mittels der Eingabe-Ausgabevorrichtung 22 sind Betriebsparameter des Feldhäckslers 2 darstellbar und durch Eingaben einer Bedienperson auswählbar und/oder veränderbar. Hierzu steht die Eingabe-Ausgabevorrichtung 22 mit der Steuerungseinrichtung 17 durch das Bussystem 20 in Verbindung.

Weiterhin ist eine zweite Sensoreinrichtung 18 vorgesehen, die als Gyroskop ausgebildet ist, welche Sensorinformationen durch Erfassen einer Raumorientierung der Karosserie des Feldhäcksler 2 und/oder der Überladevorrichtung 8 generiert. Die zweite Sensoreinrichtung 18 steht mittels des Bussystems 20 mit der Steuerungseinrichtung 17 in Verbindung. Die Steuerungseinrichtung 17 generiert ihre Ansteuerbefehle zum Führen des Erntegutstroms 11 basierend auf den Sensorinformationen der optische Sensoreinrichtung 14 und den Sensorinformation der zweiten Sensoreinrichtung 18. Kleine Änderungen der Raumorientierung der Karosserie des Feldhäckslers 2 und/oder der Überladevorrichtung 8 führen zu großen und unerwünschten Verlagerungen des Endabschnitts des Erntegutstroms 11 die gerade bei einer Fahrt von Feldhäcksler 2 und Transportwagen 4 hintereinander dazu führen können, dass der Erntegutstrom 11 den Auftreffpunkt 15 verfehlt. Dies kann bis hin zu einem Verfehlen der obenseitigen Öffnung des Transportwagens 4 führen.

Der Lenkachse 2b des Feldhäckslers 2 ist ein Lenkwinkelsensor 19 zur Erfassung eines Lenkwinkels α zugeordnet. Der Lenkwinkelsensor 19 ist ebenfalls durch das Bussystem 20 mit der Steuerungseinrichtung 17 verbunden, welche Daten des Lenkwinkelsensors 19 empfängt und auswertet. Zudem kann an dem Feldhäcksler 2 ein an das Bussystem 20 angeschlossener optischer Sensor 25 angeordnet sein, der einer vorausschauenden Erkennung der Bodenbeschaffenheit des zu befahrenden Feldbodens 5 dient.

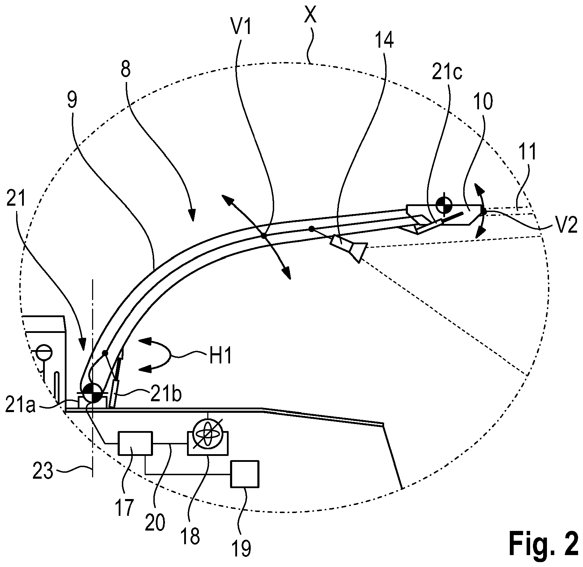

In Fig. 2 ist eine Detailansicht X der Überladevorrichtung gemäß Fig. 1 dargestellt. Die Antriebsanordnung 21 umfasst eine erste Antriebsvorrichtung 21a, mittels der die Überladevorrichtung 8 um eine vertikale Achse 23 in seitlicher Richtung H1 verschwenkbar ist. Eine zweite Antriebsvorrichtung 21b dient dazu, die Überladevorrichtung 8 in vertikaler Richtung V1 zu verschwenken. Das endseitig an dem Auswurfkrümmer 9 angeordnete Gutablenkelement 10 ist mittels einer dritten Antriebsvorrichtung 21c relativ zu dem Auswurfkrümmer 9 in einer vertikalen Richtung V2 verschwenkbar. Die Länge der Überladevorrichtung 8 kann durch das Einsetzen eines Verlängerungsabschnittes in den Auswurfkrümmer 9 veränderbar sein. Dies kann bei großen Arbeitsbreiten des Vorsatzgerätes 7 erforderlich sein, damit beim seitlichen Überladen der einzuhaltende laterale Abstand des Zugfahrzeuges 3 zu dem Feldhäcksler 2 überbrückbar ist.

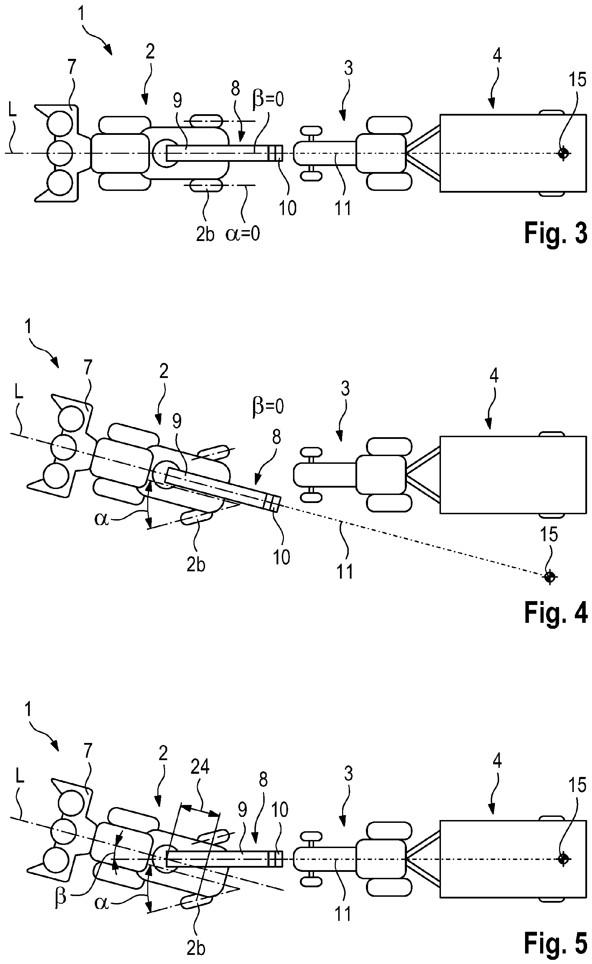

Die Darstellung in Fig. 3 zeigt eine Ansicht auf das Erntesystem 1 von oben während des Anschneidens eines Feldes. Das Anschneiden eines Feldes erfordert, dass der Transportwagen 4 hinter dem Feldhäcksler 2 geführt wird, da zu diesem frühen Zeitpunkt des Erntevorganges im Allgemeinen noch keine abgeerntete Fahrspur für das Zugfahrzeug 3 und den Transportwagen 4 zur Verfügung steht, die ein Führen des Transportwagens 4 im Wesentlichen auf der Höhe des Feldhäckslers 2 erlaubt. Die Überladevorrichtung 8 weist nach hinten, wobei zwischen der Überladevorrichtung 8 und einer Längsachse L des Feldhäckslers 2 aufgrund der weitgehenden Parallelität der Ausrichtung der Überladevorrichtung 8 zu der Längsachse L sich ein Kompensationswinkel β von etwa 0° zwischen der Längsachse L und der Überladevorrichtung 8 einstellt. Bei einem seitlich parallel versetzten Fahren des Zugfahrzeugs 3 und des Transportwagens 4 hinter dem Feldhäcksler 2 aufgrund der großen Arbeitsbreite des Vorsatzgerätes 7 kann sich auch ein Kompensationswinkel β ungleich 0° einstellen

In Fig. 4 ist eine Ansicht auf das Erntesystem 1 gemäß Fig. 3 nach Ausführung einer Lenkbewegung durch den Feldhäcksler 2 dargestellt. Die Lenkbewegung führt dazu, dass das Heck des Feldhäckslers 2 ausschwenkt und mit diesem die Überladevorrichtung 8. Dies führt dazu, dass sich der Auftreffpunkt 15 außerhalb des Transportwagens 4 befindet, so dass der Erntegutstrom 11 auf den Feldboden 5 gelangt. Dabei haben bereits geringe Lenkwinkel α einen starken Einfluss auf die Verlagerung des Auftreffpunktes 15. Dies ist unter anderem auf den gegenüber dem seitlichen Überladen erheblich größeren Abstand zwischen dem Feldhäcksler 2 und dem Transportwagen 4 zurückzuführen, da der Erntegutstrom 11 zusätzlich über das Zugfahrzeug 3 hinweg gefördert werden muss.

Die Darstellung in Fig. 5 zeigt eine Ansicht auf das Erntesystem 1 gemäß Fig. 4 nach einer Kompensation der Lenkbewegung durch eine Ansteuerung der Überladevorrichtung 8. Mittels des Lenkwinkelsensors 19 wird die Änderung des Lenkwinkels α bei der Ausführung einer Lenkbewegung erfasst und an die Steuerungseinrichtung 17 übermittelt. Die Steuerungseinrichtung 17 berechnet auf Grundlage des aktuell erfassten Lenkwinkels α den erforderlichen Kompensationswinkel β, um welchen die Überladevorrichtung 8 bezüglich der Längsachse L des Feldhäckslers 2 in seitlicher Richtung H1 verschwenkt werden muss, damit der Auftreffpunkt 15 auf dem Transportwagen 4 im Wesentlichen beibehalten wird. Die Steuerungseinrichtung 17 übermittelt hierzu Steuersignale an die erste Antriebsvorrichtung 21a, um die Überladevorrichtung 8 entsprechend des berechneten Kompensationswinkels β zu verschwenken.

Neben der Veränderung des Lenkwinkels α beeinflusst auch die Fahrgeschwindigkeit des Erntesystems 1 die Ausprägung der seitlichen Bewegung des Hecks des Feldhäckslers 2, d.h. die Fahrdynamik und hier insbesondere die Querdynamik. Die jeweilige Fahrgeschwindigkeit des Feldhäckslers 2 liegt der Steuerungseinrichtung 17 als Information vor, so dass diese in die Berechnung des Kompensationswinkels β einfließt. Weitere Parameter, welche die Querdynamik des Feldhäckslers 2 beeinflussen sind geometrische Größen wie Reifengröße oder ein Abstand 24 zwischen der vertikalen Achse 23, um die die Überladevorrichtung 8 in Richtung H1 verschwenkbar ist, und der Lenkachse 2b. Diese Parameter sind im Wesentlichen statisch und daher in einer Datenbank der Steuerungseinrichtung 17 abrufbar hinterlegt.

Ein wesentlicher die Fahrdynamik und insbesondere die Querdynamik beeinflussender Parameter ist die Bodenbeschaffenheit. Auf sehr unebenem trockenem Feldboden 5 kann eine Lenkbewegung zu einem stärkeren Ausschwenken des Hecks des Feldhäckslers 2 führen, als dies auf einem trockenen, ebenen bzw. feuchten und aufgeweichten Feldboden der Fall wäre. Insbesondere beeinflussen Unebenheiten des trockenen Feldbodens die Querdynamik stärker als dies bei feuchtem Feldboden der Fall ist. So können bei einer Lenkbewegung die Bodeneingriffsmittel der Lenkachse 2b durch die Unebenheit des Feldbodens 5 seitlich abgelenkt werden, dass diese einen parallelen Versatz zu der angestrebten Fahrspur erfahren.

Dieser die Querdynamik beeinflussende zusätzliche Parameter fließt bei der Bestimmung des aktuellen Kompensationswinkels β durch die Steuerungseinrichtung 17 ein, so dass eine verbesserte und präzisere automatisierte Ansteuerung der Überladevorrichtung 8 erreicht wird. Die Bedienperson des Feldhäckslers 2 kann sich während des Anschneidens auf das vor ihr liegende abzuerntende Feld konzentrieren, während die Steuerungseinrichtung 17 dazu eingerichtet ist, unter Berücksichtigung des Lenkwinkels α sowie der Bodenbeschaffenheit als zusätzliche die Fahrdynamik beeinflussender Parameter automatisch den Kompensationswinkel β zu bestimmen und automatisch die erforderlichen Steuersignale zur Ansteuerung der Antriebsanordnung 21 zu generieren, um den Auftreffpunkt auf dem Transportwagen 4 beizubehalten.

Der zumindest eine zusätzliche Parameter, die Bodenbeschaffenheit, kann durch eine manuelle Eingabe mittels der Eingabe-Ausgabevorrichtung 22 der Steuereinrichtung 17 bereitstellbar sein. Die Bedienperson des Feldhäckslers 2 erhält somit die Möglichkeit, eine Einschätzung des Einflusses der die Querdynamik beeinflussenden Einflussgröße selbst vorzunehmen und die Größenordnung des zumindest einen zusätzlichen Parameters entsprechend vorzugeben. Die Bedienperson kann dadurch den Einfluss auf die Querdynamik beurteilen und gewichten. Beispielsweise können mehrere Werte des zumindest einen zusätzlichen Parameters in einer Speichervorrichtung der Steuerungseinrichtung 17 hinterlegt sein. Die Werte des zumindest einen zusätzlichen Parameters können auf einer Anzeigevorrichtung der Eingabe-Ausgabevorrichtung 22 dargestellt und durch die Betätigung eines Eingabemittels manuell ausgewählt werden.

Die Steuerungsvorrichtung 17 ist dazu eingerichtet, die Intensität der Einstellung des Kompensationswinkels β durch die Antriebsanordnung 21 unter Berücksichtigung einer vorgebbaren Gewichtung durchzuführen. Dies bietet einer Bedienperson die Möglichkeit, die Ausprägung einer Lenkwinkeländerung α auf die Querdynamik in der Weise zu berücksichtigen, dass durch eine auswählbare Empfindlichkeitseinstellung die Intensität der automatischen Ansteuerung justierbar ist. Dies kann vor dem Hintergrund geschehen, dass die grundsätzlichen Einflussgrößen einzelner Parameter, wie z.B. der Lenkwinkel α, die Fahrgeschwindigkeit, die sich aus der Position von Feldhäcksler 2 und Transportwagen 4 beim Überladen ergebenden geometrischen Zusammenhänge, auf die Überladevorrichtung 8 in der Steuerungseinrichtung 17 anhand von Kennlinien oder Kennfeldern regelungstechnisch hinterlegt sein können Die Einflussfaktoren dieser verschiedenen physikalischer Größen und geometrischen Anordnungen sind innerhalb der Steuerungsvorrichtung 17 in der Speichervorrichtung hinterlegt und werden regelungstechnisch berechnet.

Alternativ oder zusätzlich kann zur Bereitstellung des zumindest einen zusätzlichen Parameter zumindest der an dem Feldhäcksler 2 angeordnete Sensor 25 vorgesehen sein. Von dem Sensor 25 erfasste Signale über die Bodenbeschaffenheit können an die Steuerungseinrichtung 17 übermittelt und von dieser ausgewertet werden. Auf Basis der Auswertung der Signale des Sensors 17 wählt die Steuerungseinrichtung 17 einen korrespondierenden Wert des zumindest einen zusätzlichen Parameters aus, um die automatisierte Ansteuerung der Antriebsanordnung 21 der Überladevorrichtung 8 zu verfeinern.

**Bezugszeichenliste**

| | | | |
|---|---|---|---|
| 1 | Erntesystem | FR | Fahrtrichtung |
| 2 | Feldhäcksler | L | Längsachse |
| 2a | Vorderachse | H1 | Seitliche Richtung |
| 2b | Lenkachse | V1 | Vertikale Richtung |
| 3 | Zugfahrzeug | V2 | Vertikale Richtung |
| 4 | Transportwagen | α | Lenkwinkel |
| 5 | Feldboden | β | Kompensationswinkel |
| 6 | Erntegut | | |
| 7 | Vorsatzgerät | | |
| 8 | Überladevorrichtung | | |
| 9 | Auswurfkrümmer | | |
| 10 | Gutablenkelement | | |
| 11 | Erntegutstrom | | |
| 12 | Häckselvorrichtung | | |
| 13 | Nachbeschleunigungsvorrichtung | | |
| 14 | Sensoreinrichtung | | |
| 15 | Auftreffpunkt | | |
| 16 | Rahmenstruktur | | |
| 17 | Steuerungseinrichtung | | |
| 18 | Zweite Sensoreinrichtung | | |
| 19 | Lenkwinkelsensor | | |
| 20 | Bussystem | | |
| 21 | Antriebsanordnung | | |
| 21a | Erste Antriebsvorrichtung | | |
| 21b | Zweite Antriebsvorrichtung | | |
| 21c | Dritte Antriebsvorrichtung | | |
| 22 | Eingabe-Ausgabevorrichtung | | |
| 23 | Vertikale Achse | | |
| 24 | Abstand | | |
| 25 | Sensor | | |

## Patentansprüche

1. Erntesystem (1), bestehend aus einem selbstfahrenden Feldhäcksler (2) und einem von einem Zugfahrzeug (3) gezogenen Transportwagen (4), welche während eines Erntevorganges zumindest zeitweise hintereinander fahren, wobei beim Hintereinanderfahren zum Überladen von durch den Feldhäcksler (2) aufgenommenen Erntegutes (6) auf den rückwärtigen Transportwagen (4), eine durch eine Antriebsanordnung (21) um zumindest eine Achse (24) verstellbare Überladevorrichtung (8) an dem Feldhäcksler (2) angeordnet ist, die durch eine Steuerungseinrichtung (17) automatisiert ansteuerbar ist, wobei die Einstellung eines Kompensationswinkels (β) zwischen der Überladevorrichtung (8) und der Längsachse (L) des Feldhäckslers (2) zur Einhaltung eines Auftreffpunktes (15) in dem Transportwagen (4) in Abhängigkeit von einer Änderung eines Lenkwinkels (α) des Feldhäckslers (2) erfolgt, **dadurch gekennzeichnet, dass** die Einstellung des Kompensationswinkels (β) unter Berücksichtigung zumindest eines zusätzlichen die Fahrdynamik beeinflussenden, der Steuereinrichtung (17) bereitgestellten Parameters erfolgt.

2. Erntesystem (1) nach Anspruch 1, **dadurch gekennzeichnet, dass** der zumindest eine zusätzliche Parameter eine über die durch die Lenkbewegung des Feldhäckslers (2) hervorgerufene Beeinflussung der Querdynamik hinausgehende Einflussgröße berücksichtigt.

3. Erntesystem (1) nach Anspruch 1 oder 2, **dadurch gekennzeichnet, dass** der zumindest eine zusätzliche Parameter durch eine manuelle Eingabe der Steuereinrichtung (17) bereitstellbar ist.

4. Erntesystem (1) nach Anspruch 1 oder 2, **dadurch gekennzeichnet, dass** zur Bereitstellung des zumindest einen zusätzlichen Parameter zumindest ein an dem Feldhäcksler (2) angeordneter Sensor (25) vorgesehen ist.

5. Erntesystem (1) nach einem der vorangehenden Ansprüche, **dadurch gekennzeichnet, dass** der zumindest eine zusätzliche Parameter die Bodenbeschaffenheit ist.

6. Erntesystem (1) nach einem der vorangehenden Ansprüche, **dadurch gekennzeichnet, dass** ein weiterer zusätzlicher Parameter eine aktuell ermittelte Fahrgeschwindigkeit ist.

7. Erntesystem (1) nach einem der vorangehenden Ansprüche, **dadurch gekennzeichnet, dass** die Einstellung des Kompensationswinkels (β) unter Berücksichtigung von spezifischen Maschinenparametern des Feldhäckslers (2) erfolgt.

8. Erntesystem (1) nach Anspruch 7, **dadurch gekennzeichnet, dass** die Maschinenparameter zumindest teilweise in der Steuerungseinrichtung (17) hinterlegt sind.

9. Erntesystem (1) nach einem der vorangehenden Ansprüche, **dadurch gekennzeichnet, dass** die Steuerungsvorrichtung (17) dazu eingerichtet ist, die Einstellung des Kompensationswinkels (β) durch die Antriebsanordnung (21) unter Berücksichtigung einer vorgebbaren Gewichtung durchzuführen.

10. Erntesystem (1) nach einem der vorangehenden Ansprüche, **dadurch gekennzeichnet, dass** zur Bestimmung des Lenkwinkels (α) ein Lenkwinkelsensor (19) vorgesehen ist.

11. Erntesystem (1) nach einem der vorangehenden Ansprüche, **dadurch gekennzeichnet, dass** die Überladevorrichtung (8) im Bereich ihrer Anordnung an dem Feldhäcksler (2) zumindest um eine vertikale Achse (23) verschwenkbar ist.

12. Erntesystem (1) nach einem der vorangehenden Ansprüche, **dadurch gekennzeichnet, dass** die Überladevorrichtung (8) an ihrem freien Ende ein verstellbares Gutablenkelement (10) aufweist, welches in Abhängigkeit von der Position der Überladevorrichtung (8) einstellbar ist.

13. Verfahren zum Betreiben eines Erntesystems (1), umfassend einen selbstfahrenden Feldhäcksler (2) und einen von einem Zugfahrzeug (3) gezogenen Transportwagen (4), welche während eines Erntevorganges hintereinander fahren, wobei Erntegut (6), welches durch den Feldhäcksler (2) aufgenommen wird, durch eine mittels einer Antriebsanordnung (21) um zumindest eine Achse (23) verstellbaren Überladevorrichtung (8), die an dem Feldhäcksler (2) angeordnet ist, auf den rückwärtigen Transportwagen (4) überladen wird, wobei die Überladevorrichtung (8) durch eine Steuerungseinrichtung (17) automatisiert angesteuert wird, wobei die Einstellung eines Kompensationswinkels (β) zwischen der Überladevorrichtung (8) und der Längsachse (L) des Feldhäckslers (2) zur Einhaltung eines Auftreffpunktes (15) in dem Transportwagen (4) in Abhängigkeit von einem Lenkwinkel (α) des Feldhäckslers (2) automatisch bestimmt wird, **dadurch gekennzeichnet, dass** die Einstellung des Kompensationswinkels (β) unter Berücksichtigung zumindest eines zusätzlichen, die Fahrdynamik beeinflussenden Parameters, welcher der Steuerungseinrichtung (17) bereitgestellt wird, durchgeführt wird.

14. Verfahren nach Anspruch 13, **dadurch gekennzeichnet, dass** der zumindest eine zusätzliche, die Fahrdynamik beeinflussende Parameter manuell vorgegeben oder durch zumindest einen an dem Feldhäcksler (2) angeordneten Sensor (25) erfasst wird.

## Claims

1. A harvesting system (1), consisting of a self-propelled forage harvester (2) and a transport vehicle (4) drawn by a traction vehicle (3) which travel one behind the other at least periodically during a harvesting procedure, wherein, when travelling one behind the other, in order to transfer harvested material (6) picked up by the forage harvester (2) over to the rearward transport vehicle (4), a transfer device (8) which can be displaced about at least one axis (24) by a drive assembly (21) is disposed on the forage harvester (2) and can be automatically controlled by a control device (17), wherein the adjustment of a compensating angle (β) between the transfer device (8) and the longitudinal axis (L) of the forage harvester (2) in order to maintain a point of impact (15) in the transport vehicle (4) is carried out as a function of a variation in a steering angle (α) of the forage harvester (2), **characterized in that** the adjustment of the compensating angle (β) is carried out taking into consideration at least one additional parameter provided to the control device (17) and which influences the driving dynamics.

2. The harvesting system (1) according to claim 1, **characterized in that** the at least one additional parameter takes into consideration an influencing factor which does not stem from the influence on the transverse dynamics brought about by the steering movement of the forage harvester (2).

3. The harvesting system (1) according to claim 1 or claim 2, **characterized in that** the at least one additional parameter can be provided by a manual input into the control device (17).

4. The harvesting system (1) according to claim 1 or claim 2, **characterized in that** in order to provide the at least one additional parameter, at least one sensor (25) is provided which is disposed on the forage harvester (2).

5. The harvesting system (1) according to one of the preceding claims, **characterized in that** the at least one additional parameter is the condition of the ground.

6. The harvesting system (1) according to one of the preceding claims, **characterized in that** a further additional parameter is a currently determined speed of travel.

7. The harvesting system (1) according to one of the preceding claims, **characterized in that** the adjustment of the compensating angle (β) is carried out taking specific machine parameters of the forage harvester (2) into consideration.

8. The harvesting system (1) according to claim 7, **characterized in that** at least some of the machine parameters are stored in the control device (17).

9. The harvesting system (1) according to one of the preceding claims, **characterized in that** the control device (17) is configured to carry out the adjustment of the compensating angle (β) by means of the drive assembly (21) by taking a pre-specifiable weighting into consideration.

10. The harvesting system (1) according to one of the preceding claims, **characterized in that** a steering angle sensor (19) is provided in order to determine the steering angle (α).

11. The harvesting system (1) according to one of the preceding claims, **characterized in that** the transfer device (8) can be pivoted about at least a vertical axis (23) in the region of its attachment to the forage harvester (2).

12. The harvesting system (1) according to one of the preceding claims, **characterized in that** at its free end, the transfer device (8) has an adjustable material deflection element (10) which can be adjusted as a function of the position of the transfer device (8).

13. A method for operating a harvesting system (1) comprising a self-propelled forage harvester (2) and a transport vehicle (4) which is drawn by a traction vehicle (3) and which travel one behind the other during a harvesting procedure, wherein harvested material (6), which is picked up by the forage harvester (2) by means of a transfer device (8) which is disposed on the forage harvester (2) and which can be displaced about at least one axis (23) by means of a drive assembly (21), is transferred over to the rearward transport vehicle (4), wherein the transfer device (8) is automatically controlled by a control device (17), wherein the adjustment of a compensating angle (β) between the transfer device (8) and the longitudinal axis (L) of the forage harvester (2) is automatically determined in order to maintain a point of impact (15) in the transport vehicle (4) as a function of a steering angle (α) of the forage harvester (2), **characterized in that** the adjustment of the compensating angle (β) is carried out by taking into consideration at least one additional parameter which is provided to the control device (17) and which influences the driving dynamics.

14. The method according to claim 13, **characterized in that** the at least one additional parameter influencing the driving dynamics is specified manually or is detected by at least one sensor (25) which is disposed on the forage harvester (2).

## Revendications

1. Système de récolte (1) constitué d'une ensileuse automotrice (2) et d'une remorque de transport (4) tractée par un véhicule de traction (3), lesquels roulent au moins temporairement l'un derrière l'autre pendant une opération de récolte, lors du roulage l'un derrière l'autre pour transférer du produit récolté (6) ramassé par l'ensileuse (2) vers la remorque de transport arrière (4), un dispositif de transfert (8) réglable par l'intermédiaire d'un agencement d'entraînement (21) autour d'au moins un axe (24) étant disposé sur l'ensileuse (2) et étant commandable de manière automatisée par l'intermédiaire d'un équipement de commande (17), le réglage d'un angle de compensation (β) entre le dispositif de transfert (8) et l'axe longitudinal (L) de l'ensileuse (2) pour respecter un point d'impact (15) dans la remorque de transport (4) s'effectuant en fonction d'une modification de l'angle de braquage (α) de l'ensileuse (2), **caractérisé en ce que** le réglage de l'angle de compensation (β) s'effectue en tenant compte au moins d'un paramètre supplémentaire influençant la dynamique de marche, fourni par l'équipement de commande (17).

2. Système de récolte (1) selon la revendication 1, **caractérisé en ce que** le au moins un paramètre supplémentaire prend en compte une grandeur d'influence qui va au-delà de l'influence de la dynamique transversale provoquée par le mouvement de braquage de l'ensileuse (2).

3. Système de récolte (1) selon la revendication 1 ou 2, **caractérisé en ce que** le au moins un paramètre supplémentaire peut être fourni par l'intermédiaire d'une entrée manuelle de l'équipement de commande (17).

4. Système de récolte (1) selon la revendication 1 ou 2, **caractérisé en ce que**, pour fournir le au moins un paramètre supplémentaire, au moins un capteur (25) disposé sur l'ensileuse (2) est prévu.

5. Système de récolte (1) selon une des revendications précédentes, **caractérisé en ce que** le au moins un paramètre supplémentaire est la nature du sol.

6. Système de récolte (1) selon une des revendications précédentes, **caractérisé en ce qu'**un autre paramètre supplémentaire est une vitesse de marche déterminée instantanément.

7. Système de récolte (1) selon une des revendications précédentes, **caractérisé en ce que** le réglage de l'angle de compensation (β) s'effectue en tenant compte de paramètres de machine spécifiques de l'ensileuse (2).

8. Système de récolte (1) selon la revendication 7, **caractérisé en ce que** les paramètres de machine sont enregistrés au moins en partie dans l'équipement de commande (17).

9. Système de récolte (1) selon une des revendications précédentes, **caractérisé en ce que** le dispositif de commande (17) est agencé pour réaliser le réglage de l'angle de compensation (β) par l'intermédiaire de l'agencement d'entraînement (21) en tenant compte d'une pondération prescriptible.

10. Système de récolte (1) selon une des revendications précédentes, **caractérisé en ce que**, pour déterminer l'angle de braquage (a), un capteur d'angle de braquage (19) est prévu.

11. Système de récolte (1) selon une des revendications précédentes, **caractérisé en ce que**, dans la zone de son implantation sur l'ensileuse (2), le dispositif de transfert (8) est pivotant au moins autour d'un axe vertical (23) .

12. Système de récolte (1) selon une des revendications, **caractérisé en ce que** le dispositif de transfert (8) comporte à son extrémité libre un élément réglable déflecteur de produit (10) qui est réglable en fonction de la position du dispositif de transfert (8).

13. Procédé de fonctionnement d'un système de récolte (1), incluant une ensileuse automotrice (2) et une remorque de transport (4) tractée par un véhicule de traction (3), lesquels roulent l'un derrière l'autre pendant une opération de récolte, du produit récolté (6), qui est ramassé par l'ensileuse (2), étant transféré vers la remorque de transport arrière (4) par l'intermédiaire d'un dispositif de transfert (8) qui est réglable autour au moins d'un axe (23) au moyen d'un agencement d'entraînement (21) et qui est disposé sur l'ensileuse (2), le dispositif de transfert (8) étant commandé de manière automatisée par l'intermédiaire d'un équipement de commande (17), le réglage de l'angle de compensation (β) entre le dispositif de transfert (8) et l'axe longitudinal (L) de l'ensileuse (2) pour respecter un point d'impact (15) dans la remorque de transport (4) étant déterminé automatiquement en fonction d'un angle de braquage (α) de l'ensileuse (2), **caractérisé en ce que** le réglage de l'angle de compensation (β) est réalisé en tenant compte au moins d'un paramètre supplémentaire qui influence la dynamique de marche et qui est fourni par l'équipement de commande (17).

14. Procédé selon la revendication 13, **caractérisé en ce que** le au moins un paramètre supplémentaire influençant la dynamique de marche est prescrit manuellement ou recueilli par l'intermédiaire d'au moins un capteur (25) disposé sur l'ensileuse (2).
